# EUROPEAN PATENT SPECIFICATION

(11) **EP 3 106 694 B1**
(45) Date of publication and mention of the grant of the patent: **04.09.2019**
(21) Application number: 14882183.8
(22) Date of filing: 27.10.2014
(51) Int. Cl.: F16C 35/067, F16C 33/58, F16B 21/10

(54) **BEARING DEVICE AND METHOD FOR MANUFACTURING BEARING DEVICE**
LAGERVORRICHTUNG UND VERFAHREN ZUR HERSTELLUNG DER LAGERVORRICHTUNG
DISPOSITIF DE PALIER ET PROCÉDÉ DE FABRICATION D'UN DISPOSITIF DE PALIER

(30) Priority: 12.02.2014 JP 2014024342
(43) Date of publication of application: 21.12.2016
(73) Proprietor: NSK Ltd., Tokyo 141-8560 (JP)
(72) Inventor: ISHIBASHI, Yutaka, Fujisawa-shi Kanagawa 251-8501 (JP); HINOHARA, Makoto, Fujisawa-shi Kanagawa 251-8501 (JP); HORIKE, Takuya, Fujisawa-shi Kanagawa 251-8501 (JP); KATOUGI, Takao, Fujisawa-shi Kanagawa 251-8501 (JP)
(74) Representative: Grünecker Patent- und Rechtsanwälte PartG mbB
(86) International application number: PCT/JP2014/078514
(87) International publication number: WO 2015/122057

(56) References cited:
- EP-A1- 3 067 581
- WO-A1-2006/097255
- DE-A1- 10 329 433
- DE-A1-102004 059 518
- DE-B3-102005 012 323
- GB-A- 2 405 678
- JP-A- S60 139 914
- JP-A- 2012 189 195
- JP-A- 2013 117 298
- JP-A- 2013 117 298
- JP-U- H0 160 024

## Description

### TECHNICAL FIELD

The present invention relates to a bearing device and a method for manufacturing the bearing device, and for example, to a bearing device to be used for a rotation support part of a gear in a power transmission such as a transmission, a differential, a transfer and the like, and a method for manufacturing the bearing device.

### BACKGROUND ART

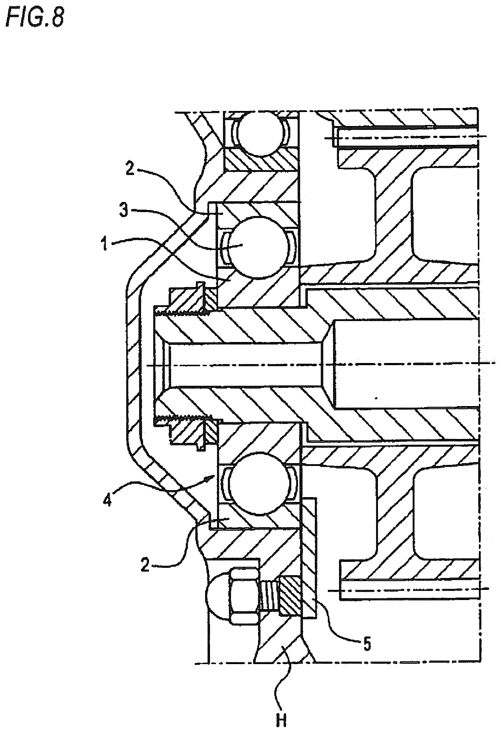

As this kind of the bearing device, for example, as shown in FIG. 8, there has been known a bearing device which includes a rolling bearing 4 having a plurality of rolling elements 3 arranged between an inner ring 1 and an outer ring 2 and a retainer plate 5 configured to abut on an axial end surface of the outer ring 2 of the rolling bearing 4 and to retain the rolling bearing 4 to a housing H (for example, refer to Patent Document 1).

Incidentally, it is demanded to reduce a size of a transmission as well as a size of a vehicle, and a bearing device satisfying this demand is disclosed in Patent Document 2. In Patent Document 2, as shown in FIG. 9, a small-diameter step portion 7 is provided at an axial end portion of an outer peripheral surface of the outer ring 2 of the rolling bearing 4, and a circular hole portion 10 of a retainer plate 5 is fitted and fixed to the small-diameter step portion 7.

In the bearing device, the retainer plate 5 is inserted to an outer side of the small-diameter step portion 7 of the outer ring 2, a material of a peripheral edge portion of the circular hole portion 10 of the retainer plate 5 is made to protrude radially inward to form an engagement protrusion 6 by pressing process, and the engagement protrusion 6 is engaged to an engagement groove 8 formed at the small-diameter step portion 7.

In this bearing device, an axial size can be shortened as compared to the structure (FIG. 8) where the retainer plate 5 is contacted to the axial end surface of the outer ring 2, so that the size of the transmission can be reduced.

Also, there has been known a press forming method in which a sliding surface 102 of an electric brush component 101 is formed to have a concave shape so as to circumscribe a commutator surface, instead of making the sliding surface 102 protrude, as shown in FIG. 10, for example (refer to Patent Document 3).

Document EP 3 067 581 A1, which was published after the filing date of the present application, relates to a bearing device with a rolling bearing and a retainer plate. An inner periphery of a circular hole of the retainer plate is formed with recess portions and engagement parts protruding radially inward and engaging a groove formed in a small diameter step portion of the outer ring.

A similar bearing device is disclosed in document GB 2 405 678 A.

### PRIOR ART DOCUMENT

### PATENT DOCUMENTS

Patent Document 1: Japanese Patent Application Publication No. 2004-028123A
Patent Document 2: Germany Patent Application Publication No. 102004031830A
Patent Document 3: Japanese Patent Application Publication No. 2003-100411A

### SUMMARY OF THE INVENTION

### PROBLEMS TO BE SOLVED

The engagement protrusion for retaining is required to keep a stable mounting state while permitting relative rotation between the retainer plate and the outer ring.

The engagement protrusion has radial and axial clearances between the retainer plate and the outer ring. Therefore, even when the engagement protrusion functions as a retainer against axial separation, if the retainer plate is inclined relative to the outer ring, it may be separated.

If a protruding amount of the engagement protrusion is large, the engagement protrusion is less likely to be separated. However, if the protruding amount is excessively large, the engagement protrusion interferes with an outer diameter surface of the small-diameter step portion of the outer ring, so that the relative rotation is disturbed. Therefore, the protruding amount should be adjusted such that the engagement protrusion is fitted to the engagement groove of the small-diameter step portion while avoiding the interference with the outer diameter surface of the small-diameter step portion. As a result, the engagement protrusion enters a range limited by a shape of the other side (herein, a shape of the small-diameter step portion of the bearing outer ring). Therefore, in a case of an engagement protrusion having a protruding amount which is set taking into account the retaining function against axial pulling, if the outer ring and the retainer plate are largely inclined or become largely eccentric, the engagement protrusion may be separated even by a slight external force (a person's handling force, vibrations upon transportation, and the like).

**If the** number of the engagement protrusions increases, the inclination and the separation can be suppressed. However, since the shape of the retainer plate is designed to avoid components in the transmission, it is not always possible to design the retainer plate as a plate shape having a space enough to provide sufficient number of engagement protrusions. For example, a case is assumed where even when it is desired to provide four engagement protrusions, only three engagement protrusions are provided due to a space. Regarding the manufacturing aspect, it may be not possible to further increase the number of the engagement protrusions due to the capability of a pressing machine. Also, the number of the engagement protrusions is preferably smaller from a standpoint of saving the mold cost.

In the bearing device of Patent Document 2, a technique of press forming the engagement protrusion for retaining is disclosed. However, a specific tip shape of the engagement protrusion is not disclosed.

In document EP 3 067 581 A1 a punch is used to form an engagement part such that a tip of the engagement part contacts the groove formed in the outer ring which serves as a mold.

In document GB 2 405 678 A a punch tool is used to form a clinching lip and to plastically deform the clinching lip causing it to engage in a triangular shaped groove formed in the outer ring.

The present invention has been made in view of the above circumstances, and an object of the present invention is to provide a bearing device where a tip shape of an engagement protrusion is capable of preventing a retainer plate and the outer ring from separating from each other even at a state where the outer ring and the retainer plate are eccentric or inclined even though pressing process is adopted, and the outer ring and the retainer plate have a non-separation structure and can rotate relative to each other while avoiding interference therebetween, and a method for manufacturing the bearing device.

### MEANS FOR SOLVING THE PROBLEMS

The above object is achieved by following.
(1) A bearing device comprises:
   a rolling bearing including a plurality of rolling elements arranged between an inner ring and an outer ring, and
   a retainer plate configured to retain the rolling bearing to a housing and having a circular hole portion to be fitted to an outer peripheral surface of the outer ring of the rolling bearing,
   wherein an outer peripheral portion of an axial end portion of the outer ring is provided with a small-diameter step portion to be fitted with the retainer plate, and an outer peripheral surface of the small-diameter step portion is formed with an engagement groove extending in a circumferential direction,
   wherein an inner peripheral portion of the circular hole portion of the retainer plate is provided with at least three cutout portions, and each of the cutout portions is formed with an engagement protrusion protruding radially inward to be engaged to the engagement groove,
   wherein an inner diameter-side tip portion of each of the engagement protrusions has a concave shape,
   wherein at least both circumferential ends of the inner diameter-side tip portion overlap with the engagement groove even at a state where the outer ring and the retainer plate are eccentric or inclined, as seen from an axial direction,
      wherein,
   the inner diameter-side tip portion of each of the engagement protrusions has a circular arc shape,
   wherein a radius of curvature of the inner diameter-side tip portion is equal to a radius of curvature of an outer peripheral surface of the small-diameter step portion of the outer ring and substantially the same as the radius of curvature of the cut out portion.
(2) In the bearing device according to (1), each of the engagement protrusions is formed to protrude radially inward by pressing process in the axial direction an edge portion of each cutout portion of an opening edge portion of the circular hole portion of the retainer plate with a punch, and
   an inner wall surface of the edge portion of each cutout portion pressed by the punch has a concave shape.
(3) A method of manufacturing a bearing device which includes a rolling bearing having a plurality of rolling elements arranged between an inner ring and an outer ring, and a retainer plate configured to retain the rolling bearing to a housing and having a circular hole portion to be fitted to an outer peripheral surface of the outer ring of the rolling bearing, wherein an outer peripheral portion of an axial end portion of the outer ring is provided with a small-diameter step portion to be fitted with the retainer plate, and an outer peripheral surface of the small-diameter step portion is formed with an engagement groove extending in a circumferential direction, and wherein an inner peripheral portion of the circular hole portion of the retainer plate is provided with at least three cutout portions, and each of the cutout portions is formed with an engagement protrusion protruding radially inward to be engaged to the engagement groove, the method comprising:
   forming the engagement protrusions protruding radially inward by pressing in an axial direction an edge portion of each cutout portion of an opening edge portion of the circular hole portion of the retainer plate with a punch,
   wherein an inner diameter-side tip portion of the engagement protrusion is formed into a concave shape, and
   wherein at least both circumferential ends of the inner diameter-side tip portion overlap with the engagement groove even at a state where the outer ring and the retainer plate are eccentric or inclined, as seen from the axial direction,
   wherein the inner diameter-side tip portion of each of the engagement protrusions has a circular arc shape, and
   wherein a radius of curvature of the inner diameter-side tip portion is equal to a radius of curvature of an outer peripheral surface of the small-diameter step portion of the outer ring and substantially the same as the radius of curvature of the cut out portion.

### EFFECTS OF THE INVENTION

According to the bearing device and the method for manufacturing the bearing device of the present invention, the inner diameter-side tip portion of the engagement protrusion of the retainer plate, which is configured to engage with the engagement groove formed at the small-diameter step portion of the outer ring, is formed into a concave shape, and at least both the circumferential ends of the inner diameter-side tip portion overlap with the engagement groove even at the state where the outer ring and the retainer plate are eccentric or inclined, as seen from the axial direction. Thereby, even when the outer ring and the retainer plate are eccentric or inclined, an engagement margin is secured between the engagement protrusion of the retainer plate and the engagement groove of the outer ring, and the retainer plate and the outer ring are prevented from separating from each other, so that it is possible to keep the stable mounting state.

### BRIEF DESCRIPTION OF THE DRAWINGS

FIG. 1A is a rear perspective view for illustrating a bearing device according to a first embodiment of the present disclosure, FIG. 1B is a perspective view, as seen from the front of FIG.1A, and FIG. 1C is a perspective view of a retainer plate, showing a state where a bearing is removed from the bearing device of FIG. 1A.
FIG. 2A is a rear view of the bearing device of FIGS. 1A and 1B, FIG. 2B is a sectional view taken along the I-I line of FIG. 2A, and FIG. 2C is an enlarged view of the II part of FIG. 2B.
FIG. 3A is a rear view of the retainer plate of the bearing device according to the first embodiment of the present disclosure, and FIG. 3B is an enlarged view of the III part of FIG. 3A.
FIG. 4 is an enlarged view of main parts around an engagement protrusion for illustrating an example of a pattern of an engaged state between the engagement protrusion of the retainer plate of the bearing device and an engagement groove provided at a small-diameter step portion of an outer ring.
FIG. 5 is an enlarged view of main parts around the engagement protrusion for illustrating another example of the pattern of a shape of the engagement protrusion of the bearing device.
FIG. 6A is a rear view of a retainer plate of a bearing device according to a second embodiment of the present disclosure, and FIG. 6B is an enlarged view of the VI part of FIG. 6A.
FIG. 7A is a rear view of a retainer plate of a bearing device according to a third embodiment of the present disclosure which is in accordance with the present invention, and FIG. 7B is an enlarged view of the VII part of FIG. 7A.
FIG. 8 is a sectional view of main parts for illustrating a conventional bearing device.
FIG. 9 is a sectional view of main parts for illustrating another conventional bearing device.

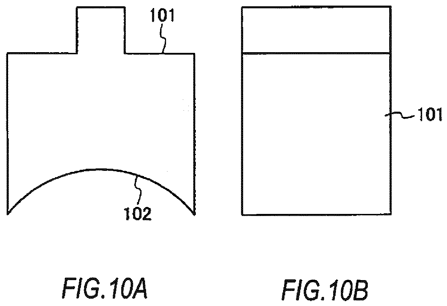

FIG. 10A is a side view of a conventional electric brush component for illustrating press forming of a sliding surface of the electric brush component into a concave shape, and FIG. 10B is a front view of FIG. 10A.

It is noted that the embodiments depicted in the figures illustrate features useful for understanding the invention, but not all embodiments include all features of the invention as defined in the claims.

### DETAILED DESCRIPTION OF EMBODIMENTS

Hereinafter, a bearing device and an engagement protrusion according to embodiments of the present disclosure will be described in detail with reference to the drawings.

### (First Embodiment)

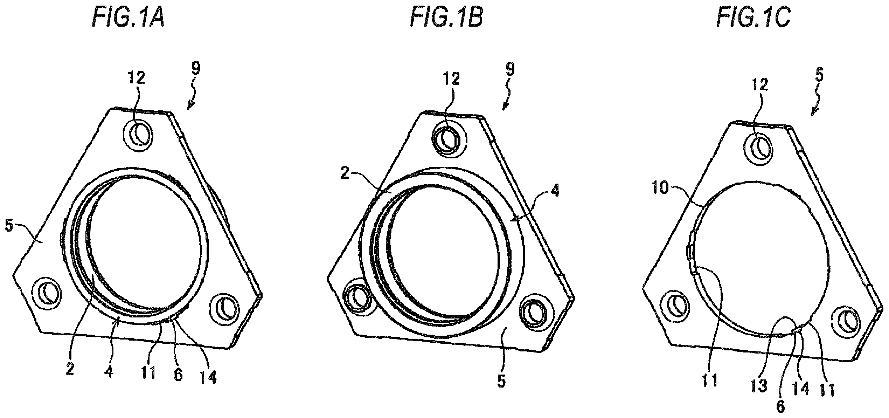

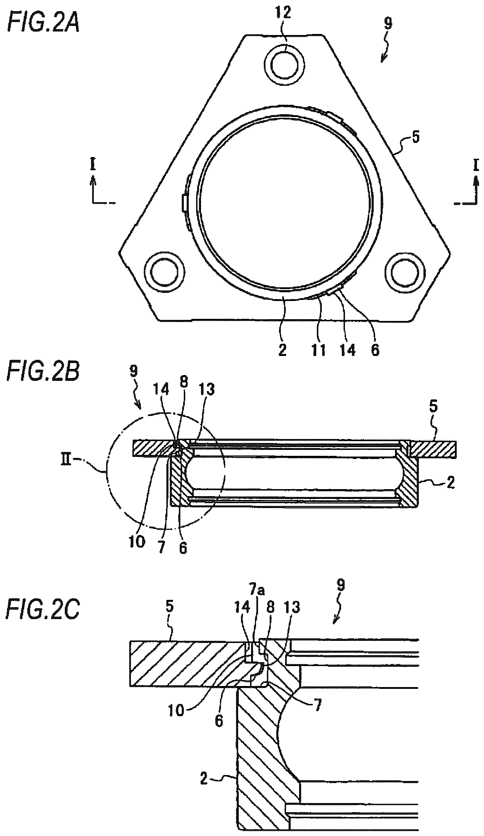

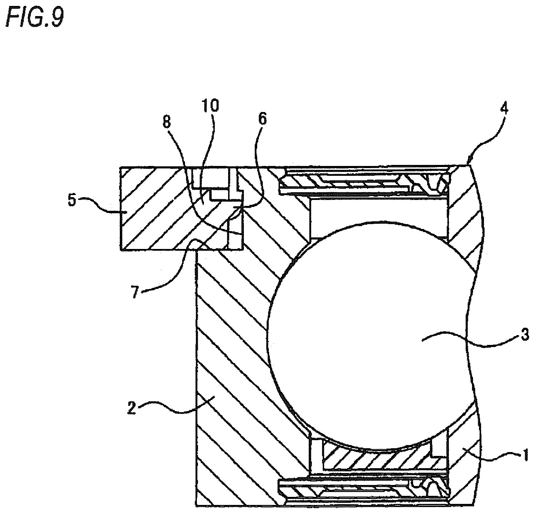

As shown in FIGS. 1 to 3, a bearing device 9 of a first illustrative embodiment is to be used for a rotation support part of a gear in a transmission, for example. Referring to FIGS. 8 and 9 showing conventional structure, the bearing device 9 includes a rolling bearing 4 having a plurality of rolling elements 3 arranged between an inner ring 1 and an outer ring 2, and a retainer plate 5 configured to retain the rolling bearing 4 to a housing H and having a circular hole portion to be fitted to an outer peripheral surface of the outer ring 2 of the rolling bearing 4. In the meantime, according to the present disclosure, a configuration of an engagement protrusion 6 of the retainer plate 5 is mainly different from the conventional structure. Therefore, in FIGS. 1A, 1B, 2A and 2B, the inner ring and the rolling element are not shown, and in the below, the retainer plate 5 and the outer ring 2 of the rolling bearing 4 to which the retainer plate 5 is to be attached will be mainly described.

As shown in FIGS. 2B and 2C, an outer peripheral portion of an axial end portion of the outer ring 2 is formed with a small-diameter step portion 7 to which the retainer plate 5 is to be fitted, and an engagement groove 8 is formed at an axially inner side portion of an outer peripheral surface of the small-diameter step portion 7 over an entire circumference.

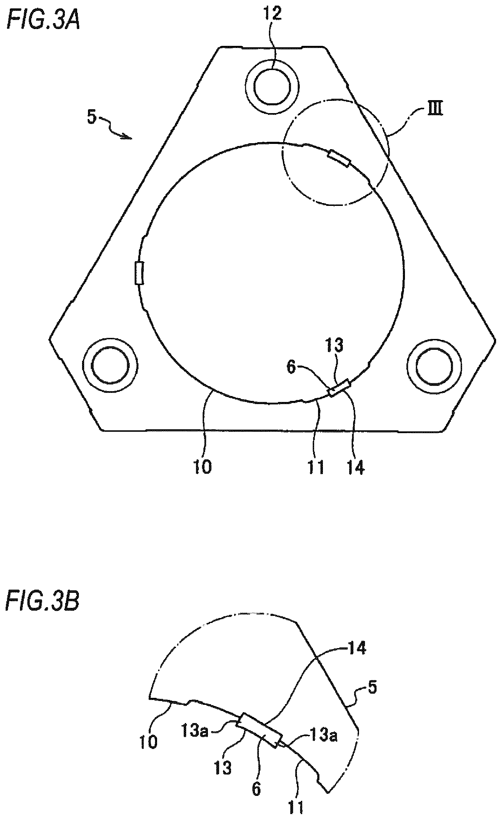

As shown in FIGS. 1C and 3A, the retainer plate 5 has a circular hole portion 10 at a center, an outward appearance thereof has a substantially triangular flange shape, and three apexes of the triangular shape are formed with insertion holes 12 for bolts (not shown).

As shown in FIGS. 1A, 1C, 2 and 3, an inner peripheral portion of the circular hole portion 10 of the retainer plate 5 is formed with three cutout portions 11 recessed radially outward in a substantially circular arc shape and circumferentially equally spaced for securing a punch space. Each cutout portion 11 is formed with an engagement protrusion 6 which protrudes radially inward and is configured to engage with the engagement groove 8 of the small-diameter step portion 7 of the outer ring 2.

The engagement protrusions 6 are made to protrude radially inward to be engaged to the engagement groove 8 of the small-diameter step portion 7 by inserting the retainer plate 5 to an outer side of the small-diameter step portion 7 of the outer ring 2 and pressing process, i.e., pressing in an axial direction edge portions of the respective cutout portions 11 sequentially or simultaneously with a punch having a tip portion of a substantially rectangular shape. A surface of the punch facing the small-diameter step portion 7 may be curved in conformity to the outer peripheral surface.

Thereby, the engagement protrusion 6 is formed such that an inner wall surface 14 of the edge portion of the cutout portion pressed by the punch has a straight shape, and an inner diameter-side tip portion 13 is formed to have a concave shape, when seeing the retainer plate 5 in the axial direction. Also, both circumferential ends 13a of the inner diameter-side tip portion 13 of each engagement protrusion 6 are formed to overlap with the engagement groove 8 even at a state where the outer ring 2 and the retainer plate 5 are eccentric or inclined, as seen from the axial direction.

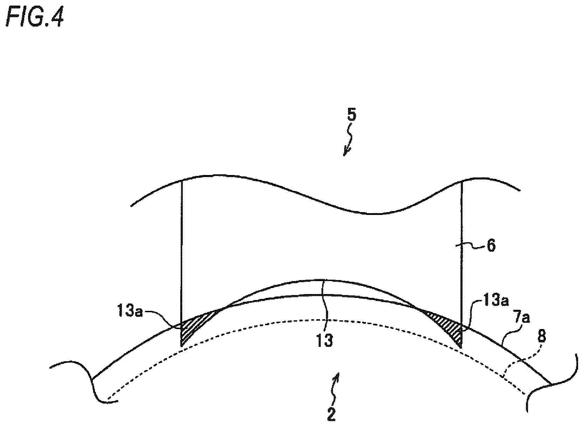

Specifically, as shown in FIG. 4, even when the outer ring 2 and the retainer plate 5 are eccentric or inclined such that an engagement margin (a hatched portion) between any one engagement protrusion 6 and the outer ring 2 is reduced, both circumferential ends 13a of the inner diameter-side tip portion 13 of the engagement protrusion 6 are engaged with the engagement groove 8 of the outer ring 2 and are located at more inner diameter-sides than an outer peripheral surface 7a of the small-diameter step portion 7.

In the first embodiment, the inner diameter-side tip portion 13 of the engagement protrusion 6 has a circular arc shape, and a radius of curvature of the inner diameter-side tip portion 13 is smaller than a radius of curvature of the outer peripheral surface 7a of the small-diameter step portion 7 of the outer ring 2.

Therefore, even when the number of the engagement protrusions 6 is small, it is possible to more effectively prevent the retainer plate 5 and the outer ring 2 from separating from each other, and the retainer plate 5 is attached to the outer ring 2 to be inseparable and to be relatively rotatable. In the meantime, as the width of the engagement protrusion 6 in a direction perpendicular to the protruding direction is wider, the inclination between the outer ring 2 and the retainer plate 5 can be suppressed more, so that the engagement protrusion functions as a retainer more favorably.

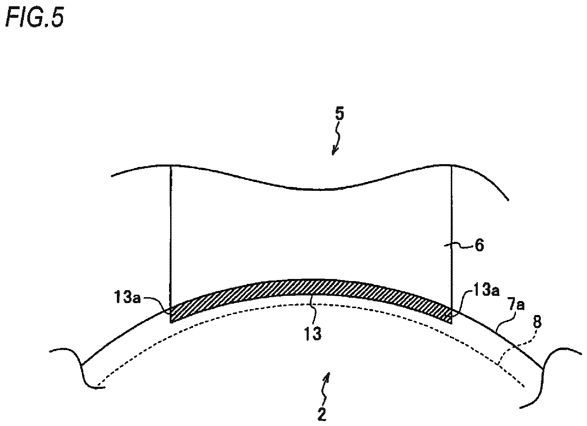

Further, as shown in FIG. 5, from a standpoint of strength of the engagement protrusion 6, the inner diameter-side tip portion 13 of the engagement protrusion 6 preferably has a circular arc shape which is concentric with and has the same radius of curvature as the outer peripheral surface 7a of the small-diameter step portion 7, as seen from the axial direction. However, when a volume of the engagement protrusion 6 is sufficient, at least both ends thereof should be engaged. This shape can be formed even with a mold in which accuracy is lowered.

The shape of the inner diameter-side tip portion 13 of the engagement protrusion 6 may be adjusted in conformity to the formability and utilities, and a semicircular shape, an elliptical shape, a U shape, a V shape and the like may be used based on the cutout portion 11 or the tip shape of the punch.

### (Second Embodiment)

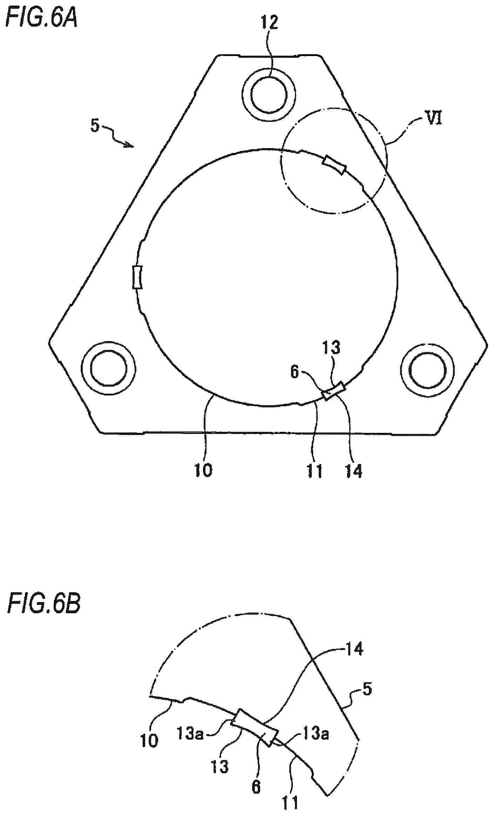

FIG. 6A is a rear view of a retainer plate of a bearing device according to a second illustrative embodiment of the present disclosure, and FIG. 6B is an enlarged view of the VI part of FIG. 6A.

In the second embodiment, the pressing process is performed using a punch having a concave shape. Therefore, the inner wall surface 14 of the edge portion of the cutout portion 11 pressed by the punch has a convex shape.

In this case, since the material of the edge portion of the cutout portion 11 forming both circumferential ends 13a of the inner diameter-side tip portion 13 of the engagement protrusion 6 moves more, the inner diameter-side tip portion 13 made to protrude by the pressing process is more easily formed into a concave shape, which is appropriate when making both circumferential ends more protrude toward the inner diameter.

The other configurations and operations are the same as the first embodiment.

### (Third Embodiment)

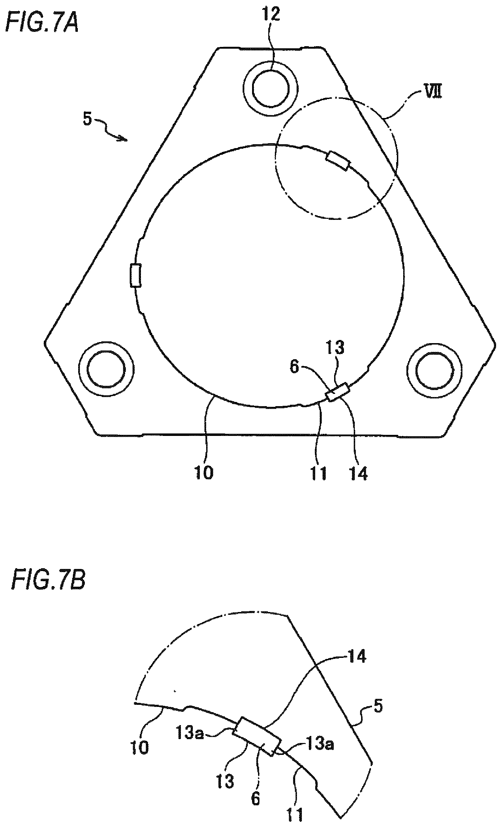

FIG. 7A is a rear view of a retainer plate of a bearing device according to a third embodiment which is in accordance with the present invention, and FIG. 7B is an enlarged view of the VII part of FIG. 7A.

In the third embodiment, the pressing process is performed using a punch having a convex shape. Therefore, the inner wall surface 14 of the edge portion of the cutout portion 11 pressed by the punch has a concave shape.

In this case, the inner diameter-side tip portion 13 of the engagement protrusion 6 has a concave shape of which radius of curvature is substantially the same as the radius of curvature of the cutout portion 11, i.e., has a shape close to the shape of the outer peripheral surface of the engagement groove 8 without making both circumferential ends 13a protruding so much.

The other configurations and operations are the same as the first embodiment.

In the meantime, the configurations of the inner ring, the outer ring, the rolling element, the bearing, the retainer plate, the engagement groove, the engagement protrusion, the small-diameter step portion and the like of the present invention are not limited to the above-described embodiments, and can be appropriately changed without departing from the invention as defined in the claims.

For example, in the above-described embodiments, the engagement protrusions 6 and the cutout portions 11 are formed at three places of the inner peripheral portion of the retainer plate 5. However, the present invention is not limited thereto. For example, the engagement protrusions 6 and the cutout portions 11 may be formed at four or more places of the inner peripheral portion of the retainer plate 5.

Further, in the above-described embodiments, the engagement groove 8 is formed over the entire circumference in the circumferential direction of the outer peripheral surface of the small-diameter step portion 7. However, the present invention is not limited thereto. For example, engagement grooves extending in the circumferential direction may be formed at a plurality of places of the outer peripheral surface of the small-diameter step portion 7.

The present application is based on a Japanese Patent Application No. 2014-24342 filed on February 12, 2014.

### Description of Reference Numerals

- 1: inner ring
- 2: outer ring
- 3: rolling element
- 4: rolling bearing
- 5: retainer plate
- 6: engagement protrusion
- 7: small-diameter step portion
- 8: engagement groove
- 9: bearing device
- 10: circular hole portion
- 11: cutout portion
- 12: insertion hole
- 13: inner diameter-side tip portion
- 14: inner wall surface

## Claims

1. A bearing device (9) comprising:
a rolling bearing (4) including a plurality of rolling elements (3) arranged between an inner ring (1) and an outer ring (2), and
a retainer plate (5) configured to retain the rolling bearing (4) to a housing (H) and having a circular hole portion (10) to be fitted to an outer peripheral surface of the outer ring (2) of the rolling bearing (4),
wherein an outer peripheral portion of an axial end portion of the outer ring (2) is provided with a small-diameter step portion (7) to be fitted with the retainer plate (5), and an outer peripheral surface (7a) of the small-diameter step portion (7) is formed with an engagement groove (8) extending in a circumferential direction,
wherein an inner peripheral portion of the circular hole portion (10) of the retainer plate (5) is provided with at least three cutout portions (11), and each of the cutout portions (11) is formed with an engagement protrusion (6) protruding radially inward to be engaged to the engagement groove (8),
wherein an inner diameter-side tip portion (13) of each of the engagement protrusions (6) has a concave shape,
wherein at least both circumferential ends (13a) of the inner diameter-side tip portion (13) overlap with the engagement groove (8) even at a state where the outer ring (2) and the retainer plate (5) are eccentric or inclined, as seen from an axial direction,
wherein the inner diameter-side tip portion (13) of each of the engagement protrusions (6) has a circular arc shape,
wherein a radius of curvature of the inner diameter-side tip portion (13) is equal to a radius of curvature of an outer peripheral surface (7a) of the small-diameter step portion (7) of the outer ring (2) and substantially the same as the radius of curvature of the cutout portion (11).

2. The bearing device (9) according to claim 1,
**characterized in that** each of the engagement protrusions (6) is formed to protrude radially inward by pressing in the axial direction an edge portion of each cutout portion (11) of an opening edge portion of the circular hole portion (10) of the retainer plate (5) with a punch, and that an inner wall surface of the edge portion of each cutout portion (11) pressed by the punch has a concave shape.

3. A method of manufacturing a bearing device (9) which includes a rolling bearing (4) having a plurality of rolling elements (3) arranged between an inner ring (1) and an outer ring (2), and a retainer plate (5) configured to retain the rolling bearing (4) to a housing (H) and having a circular hole portion (10) to be fitted to an outer peripheral surface of the outer ring (2) of the rolling bearing (4), wherein an outer peripheral portion of an axial end portion of the outer ring (2) is provided with a small-diameter step portion (7) to be fitted with the retainer plate (5), and an outer peripheral surface (7a) of the small-diameter step portion (7) is formed with an engagement groove (8) extending in a circumferential direction, and wherein an inner peripheral portion of the circular hole portion (10) of the retainer plate (5) is provided with at least three cutout portions (11), and each of the cutout portions (11) is formed with an engagement protrusion (6) protruding radially inward to be engaged to the engagement groove (8), the method comprising:
forming the engagement protrusions (6) protruding radially inward by pressing in an axial direction an edge portion of each cutout portion (11) of an opening edge portion of the circular hole portion (10) of the retainer plate (5) with a punch,
wherein an inner diameter-side tip portion (13) of the engagement protrusion (6) is formed into a concave shape,
wherein at least both circumferential ends (13a) of the inner diameter-side tip portion (13) overlap with the engagement groove (8) even at a state where the outer ring (2) and the retainer plate (5) are eccentric or inclined, as seen from the axial direction,
wherein the inner diameter-side tip portion (13) of each of the engagement protrusions (6) has a circular arc shape, and
wherein a radius of curvature of the inner diameter-side tip portion (13) is equal to a radius of curvature of an outer peripheral surface (7a) of the small-diameter step portion (7) of the outer ring (2) and substantially the same as the radius of curvature of the cutout portion (11).

## Patentansprüche

1. Lagerungsvorrichtung (9), die umfasst:
ein Wälzlager, das eine Vielzahl von Wälzkörpern (3) enthält, die zwischen einem Innenring (1) und einem Außenring (2) angeordnet sind; sowie
eine Halteplatte (5), die so eingerichtet ist, dass sie das Wälzlager an einem Gehäuse (H) hält, und die einen kreisförmigen Lochabschnitt (10) aufweist, der auf eine Außenumfangsfläche des Außenrings (2) des Wälzlagers (4) aufgepasst wird,
wobei ein Außenumfangsabschnitt eines axialen Endabschnitts des Außenrings (2) mit einem Absatzabschnitt (7) mit kleinem Durchmesser versehen ist, der mit der Halteplatte (5) in Passung gebracht wird, und eine Außenumfangsfläche (7a) des Absatzabschnitts (7) mit kleinem Durchmesser mit einer Eingriffsnut (8) versehen ist, die in einer Umfangsrichtung verläuft,
ein Innenumfangsabschnitt des kreisförmigen Lochabschnitts (10) der Halteplatte (5) mit wenigstens drei ausgeschnittenen Abschnitten (11) versehen ist, und jeder der ausgeschnittenen Abschnitte (11) mit einem Eingriffsvorsprung (6) versehen ist, der radial nach innen vorsteht und mit der Eingriffsnut (8) in Eingriff gebracht wird,
ein Spitzenabschnitt (13) an der Innendurchmesser-Seite jedes der Eingriffsvorsprünge (6) eine konkave Form hat,
wenigstens beide Umfangsenden (13a) des Spitzenabschnitts (13) an der Innendurchmesser-Seite sich mit der Eingriffsnut (8) auch in einem Zustand überlappen, in dem der Außenring (2) und die Halteplatte (5), in einer axialen Richtung gesehen, exzentrisch oder geneigt sind,
der Spitzenabschnitt (13) an der Innendurchmesser-Seite jedes der Eingriffsvorsprünge (6) eine Kreisbogenform hat,
und ein Krümmungsradius des Spitzenabschnitts (13) an der Innendurchmesser-Seite einem Krümmungsradius einer Außenumfangsfläche (7a) des Absatzabschnitts (7) mit kleinem Durchmesser des Außenrings (2) gleich ist und im Wesentlichen der gleiche ist wie der Krümmungsradius des ausgeschnittenen Abschnitts (11) ist.

2. Lagerungsvorrichtung nach Anspruch 1,
**dadurch gekennzeichnet, dass** jeder der Eingriffsvorsprünge (6) so ausgebildet ist, dass er radial nach innen vorsteht, wenn ein Randabschnitt jedes ausgeschnittenen Abschnitts (11) eines Öffnungsrandabschnitts des kreisförmigen Lochabschnitts (10) der Halteplatte (5) mit einem Stempel in der axialen Richtung gedrückt wird, und
dass eine Innenwandfläche des mit dem Stempel gedrückten Randabschnitts jedes ausgeschnittenen Abschnitts (11) eine konkave Form hat.

3. Verfahren zum Herstellen einer Lagerungsvorrichtung (9), die ein Wälzlager, das eine Vielzahl von Wälzkörpern (3) aufweist, die zwischen einem Innenring (1) und einem Außenring (2) angeordnet sind, sowie eine Halteplatte (5) enthält, die so eingerichtet ist, dass sie das Wälzlager an einem Gehäuse (H) hält, und die einen kreisförmigen Lochabschnitt (10) aufweist, der auf eine Außenumfangsfläche des Außenrings (2) des Wälzlagers (4) aufgepasst wird, wobei ein Außenumfangsabschnitt eines axialen Endabschnitts des Außenrings (2) mit einem Absatzabschnitt (7) mit kleinem Durchmesser versehen ist, der mit der Halteplatte (5) in Passung gebracht wird, und eine Außenumfangsfläche (7a) des Absatzabschnitts (7) mit kleinem Durchmesser mit einer Eingriffsnut (8) versehen ist, die in einer Umfangsrichtung verläuft, ein Innenumfangsabschnitt des kreisförmigen Lochabschnitts (10) der Halteplatte (5) mit wenigstens drei ausgeschnittenen Abschnitten (11) versehen ist, und jeder der ausgeschnittenen Abschnitte (11) mit einem Eingriffsvorsprung (6) versehen ist, der radial nach innen vorsteht und mit der Eingriffsnut (8) in Eingriff gebracht wird, und wobei das Verfahren umfasst:
Ausbilden der Eingriffsvorsprünge (6), die radial nach innen vorstehen, indem ein Randabschnitt jedes ausgeschnittenen Abschnitts (11) eines Öffnungsrandabschnitts des kreisförmigen Lochabschnitts (10) der Halteplatte (5) mit einem Stempel in der axialen Richtung gedrückt wird,
wobei ein Spitzenabschnitt (13) an der Innendurchmesser-Seite des Eingriffsvorsprungs (6) in einer konkaven Form ausgebildet wird,
wenigstens beide Umfangsenden (13a) des Spitzenabschnitts (13) an der Innendurchmesser-Seite sich mit der Eingriffsnut (8) auch in einem Zustand überlappen, in dem der Außenring (2) und die Halteplatte (5), in der axialen Richtung gesehen, exzentrisch oder geneigt sind,
der Spitzenabschnitt (13) an der Innendurchmesser-Seite jedes der Eingriffsvorsprünge (6) eine Kreisbogenform hat, und
ein Krümmungsradius des Spitzenabschnitts (13) an der Innendurchmesser-Seite einem Krümmungsradius einer Außenumfangsfläche (7a) des Absatzabschnitts (7) mit kleinem Durchmesser des Außenrings (2) gleich ist und im Wesentlichen der gleiche ist wie der Krümmungsradius des ausgeschnittenen Abschnitts (11) ist.

## Revendications

1. Dispositif formant palier (9) comprenant :
un palier à roulement (4) comprenant une pluralité d'éléments roulants (3) agencés entre une bague intérieure (1) et une bague extérieure (2), et
une plaque de retenue (5) configurée pour retenir le palier à roulement (4) sur un carter (H) et comportant une partie à trou circulaire (10), destinée à être montée sur une surface périphérique extérieure de la bague extérieure (2) du palier à roulement (4),
dans lequel une partie périphérique externe d'une partie d'extrémité axiale de la bague extérieure (2) est pourvue d'une partie en gradin de petit diamètre (7) destinée à être ajustée avec la plaque de retenue (5), et une rainure de mise en prise (8) s'étendant dans une direction circonférentielle est ménagée dans une surface périphérique extérieure (7a) de la partie en gradin de petit diamètre (7),
dans lequel une partie périphérique interne de la partie à trou circulaire (10) de la plaque de retenue (5) comporte au moins trois parties découpées (11), et chacune des parties découpées (11) est pourvue d'une saillie de mise en prise (6) faisant saillie radialement vers l'intérieur et destinée à être mise en prise avec la rainure de mise en prise (8),
dans lequel une partie distale côté diamètre intérieur (13) de chacune des saillies de mise en prise (6) a une forme concave,
dans lequel au moins les deux extrémités circonférentielles (13a) de la partie distale côté diamètre intérieur (13) chevauche la rainure de mise en prise (8) même dans un état où la bague extérieure (2) et la plaque de retenue (5) sont excentriques ou inclinées, vues dans une direction axiale,
dans lequel la partie distale côté diamètre intérieur (13) de chacune des saillies de mise en prise (6) a une forme circulaire en arc,
dans lequel un rayon de courbure de la partie distale côté diamètre intérieur (13) est égal à un rayon de courbure d'une surface périphérique extérieure (7a) de la partie en gradin de petit diamètre (7) de la bague extérieure (2) et est sensiblement identique au rayon de courbure de la partie découpée (11).

2. Dispositif formant palier (9) selon la revendication 1,
**caractérisé en ce que** chacune des saillies de mise en prise (6) est formée pour faire saillie radialement vers l'intérieur en pressant dans la direction axiale une partie de bord de chaque partie découpée (11) d'une partie de bord d'ouverture de la partie à trou circulaire (10) de la plaque de retenue (5) à l'aide d'un poinçon, et **en ce que** la surface d'une paroi intérieure de la partie de bord de chaque partie découpée (11) pressée par le poinçon a une forme concave.

3. Procédé de fabrication d'un dispositif formant palier (9) qui comprend un palier à roulement (4) comprenant une pluralité d'éléments roulants (3) agencés entre une bague intérieure (1) et une bague extérieure (2), et une plaque de retenue (5) configurée pour retenir le palier à roulement (4) sur un carter (H) et comportant une partie à trou circulaire (10) destinée à être montée sur une surface périphérique extérieure de la bague extérieure (2) du palier à roulement (4), dans lequel une partie périphérique externe d'une partie d'extrémité axiale de la bague extérieure (2) est pourvue d'une partie en gradin de petit diamètre (7) destinée à être ajustée avec la plaque de retenue (5), et une rainure de mise en prise (8) s'étendant dans une direction circonférentielle est ménagée dans une surface périphérique extérieure (7a) de la partie en gradin de petit diamètre (7), et dans lequel une partie périphérique interne de la partie à trou circulaire (10) de la plaque de retenue (5) comporte au moins trois parties découpées (11), et chacune des parties découpées (11) est pourvue d'une saillie de mise en prise (6) faisant saillie radialement vers l'intérieur et destinée à être mise en prise avec la rainure de mise en prise (8), le procédé consistant à :
former les saillies de mise en prise (6) faisant saillie radialement vers l'intérieur en pressant dans une direction axiale une partie de bord de chaque partie découpée (11) d'une partie de bord d'ouverture de la partie à trou circulaire (10) de la plaque de retenue (5) à l'aide d'un poinçon,
dans lequel une partie distale côté diamètre intérieur (13) de la saillie de mise en prise (6) a une forme concave,
dans lequel au moins les deux extrémités circonférentielles (13a) de la partie distale côté diamètre intérieur (13) chevauchent la rainure de mise en prise (8) même dans un état où la bague extérieure (2) et la plaque de retenue (5) sont excentriques ou inclinées, vues dans la direction axiale,
dans lequel la partie distale côté diamètre intérieur (13) de chacune des saillies de mise en prise (6) a une forme circulaire en arc, et
dans lequel un rayon de courbure de la partie distale côté diamètre intérieur (13) est égal à un rayon de courbure d'une surface périphérique extérieure (7a) de la partie en gradin de petit diamètre (7) de la bague extérieure (2) et est sensiblement identique au rayon de courbure de la partie découpée (11).
